# EUROPEAN PATENT APPLICATION

(11) **EP 2 354 606 A1**
(43) Date of publication of application: **10.08.2011**
(21) Application number: 11153972.2
(22) Date of filing: 10.02.2011
(51) Int. Cl.: F16K 1/36, F16K 1/48, F16B 33/06

(54) **Valve Process**

(30) Priority: 10.02.2010 GB 1002169
(71) Applicant: General Carbide (UK) Limited, Southam Warwickshire CV47 0HF (GB)
(72) Inventor: Print, Roderick Ronald, Kislingbury, Northamptonshire NN7 4AT (GB); Knowles, Melvyn David, Daventry, Northamptonshire NN11 9QD (GB)
(74) Representative: Burrows, Anthony Gregory

(57) **Abstract**

A method involving the fixing together of parts of a flow control valve, or a pressure control valve, used in the oil and gas industry, to produce an operational unit in which the parts of the valve are fixed to one another according to a process wherein the incidence of failure of the valves is minimised, both during manufacture and during operation, said valve consisting of a minimum of two parts which are to be fixed together, wherein one part is provided with a male thread and the other part is provided with a female thread, so that one part can be screwed into the other, and wherein the dimensions and shapes of the threads on each part are such as to leave a gap between them when they are screwed together, wherein the gap is sufficient to allow a high-temperature resistant resin, in the form of a compressible powder, to be located between the threads, and between other, otherwise mutually contacting surfaces.

## Description

This invention relates to a method for fixing a driving part of a valve system to a driven part, in choke and control valves used in the oil and gas industry.

As a consequence of experiences with valve manufacture and usage, a need has been identified for improving the method of manufacture of choke, and control, valves, used in the oil and gas industry, since the current method of manufacture suffers from a 10 % failure rate, and there is a 10 % failure rate when such valves are in use.

The present process is operated under the name GenFixx. This is one possible Trade Mark for the process.

According to the present invention, the valve system, commonly referred to as a plug system, is composed of two parts:
a) The driving part, which can be constructed from any specialised material such as, Stainless Steel, Inconel, Duplex, or Super Duplex, which can withstand manufacturing and operational conditions,
b) The driven part, which is constructed from Tungsten Carbide.

Depending on the application, the driven part either controls, or chokes, the flow of gas, or oil, though the said valve.

### Disadvantages of the Present Process for Fixing Valve Parts to One Another

The current method which is utilised for constructing choke, and control, valves, suffers from a number of disadvantages:
1. The current method involves the brazing of the stainless steel operating part, to the Tungsten Carbide, driven part, and this does not provide a satisfactory fixing method because the braze tends to run down the sides of the operational parts of the valve system, non-uniformly.
2. The temperature of 800 degrees Celsius, required for the brazing process, changes the properties of the Stainless Steel, and of the Tungsten Carbide, to the extent that fractures occur in both components during the brazing process.
3. The linear coefficient of expansion of stainless steel is 2.5 times that for Tungsten Carbide, and this means that, during the subsequent cooling period, and consequent contraction, the differing coefficients of expansion cause the Tungsten Carbide to contract more than does the Stainless Steel. Moreover, during operational use, the oil and gas valves undergo heating and cooling, so that the jointed materials are placed under considerable stress, and therefore crack. This gives rise to a 10 % failure rate in the manufacturing process, and a 10 % failure rate in operational use.
4. Other methods involve shrink-fixing of one component part to the other; giving rise to a so-called interference-fit. Such interference-fit methods can result in considerable stress on materials and consequent wastage of time, effort, and expenditure. Moreover, tolerances have to be controlled very accurately.

### Advantages of the New Process for Fixing Valve Parts to One Another

1. In one variant of the new process for constructing oil and gas valves, the Stainless Steel, operating part, is intimately attached to the Tungsten Carbide, driven part, by using a male thread on the former, and a female thread on the latter. In another variant of the new process, the Stainless Steel, operating part, is intimately attached to the Tungsten Carbide, driven part, by using a female thread on the former, and a male thread on the latter.
   In either variant, a high-temperature resistant, resin-based, cushioning material, in the form of a compressible powder, is utilised. This serves as an adhesive for bonding purposes, whilst also functioning, i) as a sealant between the threads, and ii) to fill any voids between the surfaces of the Stainless Steel part and the Tungsten Carbide part.
2. The incorporation of threads, having specially calculated dimensions, and contours, based upon aircraft and aerospace threads, together with cushioning material between the threads of the driving part and the driven part, and between otherwise contacting regions of either part, then ensures that minimum stress is imposed on either part as, i) in one variant, the inner Stainless Steel operating part, and the outer Tungsten Carbide driven part, and ii) in another variant, the inner Tungsten Carbide part and the outer Stainless Steel part, i) expand and contract, during operational exposure to temperatures ranging from +204, degrees Celsius to sub-zero degrees Celsius, and ii) are subjected to forces applied during operational use.
3. Special design of the threads serves further to minimise the effects of vibration encountered during operation, and, in one variant, a Tungsten Carbide, anti-vibration pin having a diameter of approximately 3.0 mm, passes through the outer Tungsten Carbide part, and the inner Stainless Steel part, and in another variant, passes through the outer Stainless Steel part and the inner Tungsten Carbide part, and also serves to prevent relative rotation of one part with respect to the other, during operational use. The optimum clearance between the threads is 0.004 inches.

The resin thus acts like expanding and contracting rubber, by cushioning the effects of the relative expansion and contraction of the component parts of the valve system.

It is pointed out, with respect to the foregoing, and following account, that the said process can be applied to any materials utilised in a process involving the fixing of at least one component part to another, wherein, during manufacturing, and operational, use, stresses on component parts resulting from operational forces and environmental conditions, are to be minimised.

In order to describe the invention in more detail, reference will now be made to the accompanying diagrams in which:
Figure 1 shows, in schematic form, a three-dimensional diagram of externally visible embodiments of the invention.
Figure 2 shows, in schematic, exploded form, a three-dimensional diagram of external and internal embodiments of the invention.
Figure 3 shows, in schematic, two-dimensional, sectional form, a front-elevation of embodiments of the invention.
Figure 4 shows, in schematic form, a three-dimensional diagram of external and internal embodiments of the invention.
Figure 5 shows, in schematic, cutaway form, a three-dimensional diagram of external and internal embodiments of the invention.
Figure 6 shows, in schematic, three-dimensional form, external and internal embodiments of the invention.
Figure 7 shows, in schematic, exploded form, a three-dimensional diagram of external and internal embodiments of the invention.
Figure 8 shows, in schematic, two-dimensional sectional form, a front elevation of embodiments of the invention.

It is to be noted, with respect to the foregoing account, that the component parts described in the following diagrams which demonstrate features of the invention, involve one variant of the process in which the Stainless Steel, driving part, has an external male thread, whilst the Tungsten Carbide, driven part, has an internal female thread, and another variant of the process in which the Stainless Steel, driving part, has an internal female thread, and the Tungsten Carbide, driven part, has an external male thread. In this other variant, an anti-rotation pin, and anti-vibration and stress minimising high-temperature resin, are used in the same way.

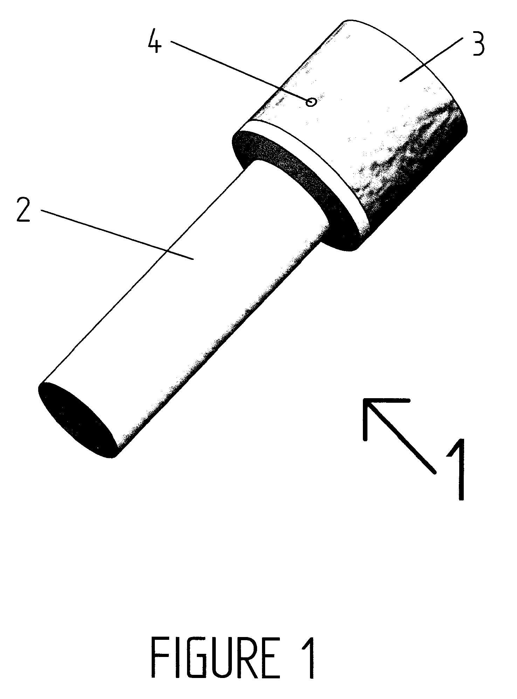

With reference to Figure 1, which represents a schematic, three-dimensional view, an oil, or gas, valve system, 1, has a Stainless Steel, driving part, 2, and a Tungsten Carbide, driven part, 3, wherein the driven part, 3, which blocks, or controls, the flow of oil or gas through the valve (not shown in the diagram) is made to move forwards and backwards, into, and out of, a female part (not shown in the diagram).

In order to prevent rotation of the Tungsten Carbide part, 3, relative to the Stainless Steel part, 2, an anti-rotation, Tungsten Carbide pin, 4, is fixed firmly into a longitudinal hole formed in part 3, and in part 2, wherein the two holes are in accurate alignment with one another.

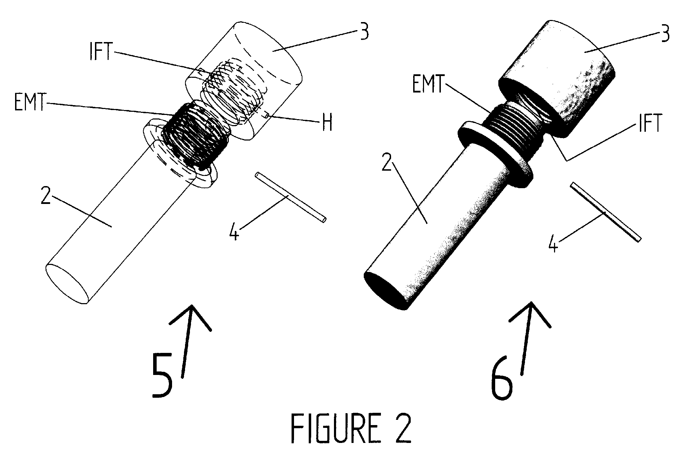

With reference to Figure 2, which represents a schematic, three-dimensional view, the oil, or gas, valve system, 1, already described with reference to Figure 1, is shown again, in two configurations. The first configuration, 5, shows an exploded outline view of the component parts of the valve system, including the anti-rotation pin, 4, the externally threaded, Stainless Steel part, 2, and the internally threaded, Tungsten Carbide part, 3. In addition, the external male thread, EMT, formed on the Stainless Steel part, 2, and the internal female thread, IFT, formed inside the Tungsten Carbide part, 3, are shown in outline form. The hole, H, formed in both parts, for accepting the anti-rotation pin, 4, is also shown.

With further reference to Figure 2, the second configuration, 6, shows an exploded, shaded view, of the component parts of the valve system, including the anti-rotation pin, 4, the externally threaded, Stainless Steel part, 2, and the internally threaded, Tungsten Carbide part, 3. The external, and internal, threads, already described, are shown as EMT, and IFT, respectively.

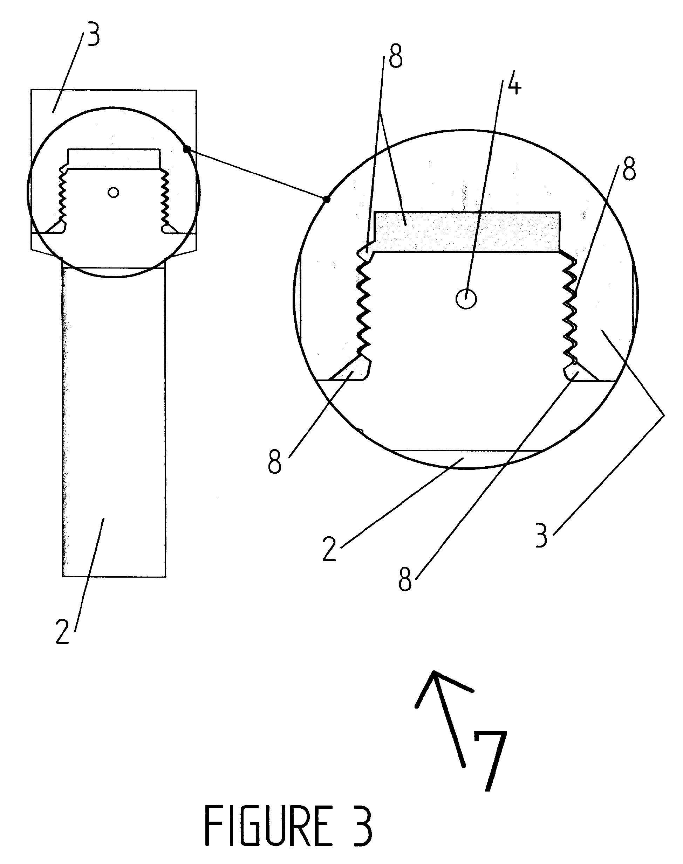

With reference to Figure 3, the schematic, two-dimensional view, 7, shows, on the left hand side, a section of a front elevation of the oil, or gas, valve system, and on the right hand side, an enlarged view of part of the region involving the thread and the resin packing, 8. All other parts are as already described with reference to earlier Figures.

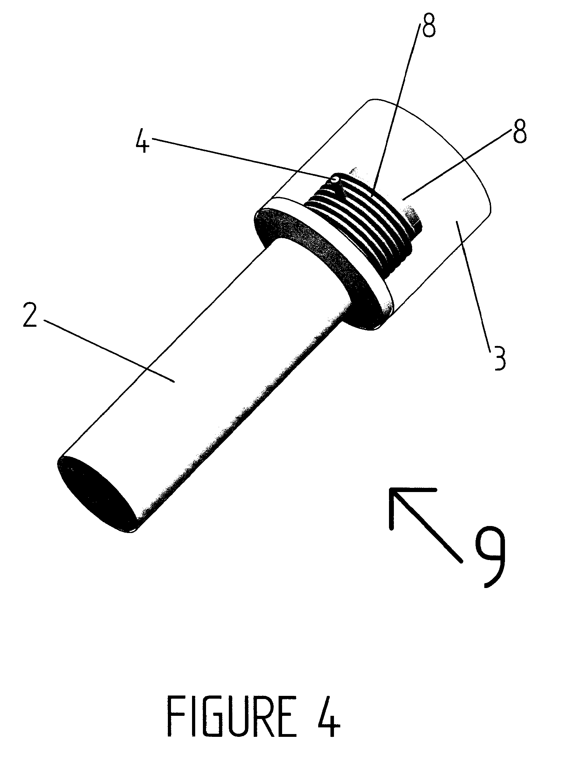

With reference to Figure 4, which represents a schematic, three-dimensional view, 9, the oil, or gas, valve system is shown with the Tungsten Carbide driven part, 3, depicted in translucent form, so that the path of the anti-rotation pin, 4, the location of the external thread formed on the Stainless Steel part, 2, and the location of the high-temperature resistant resin, 8, can each be readily seen.

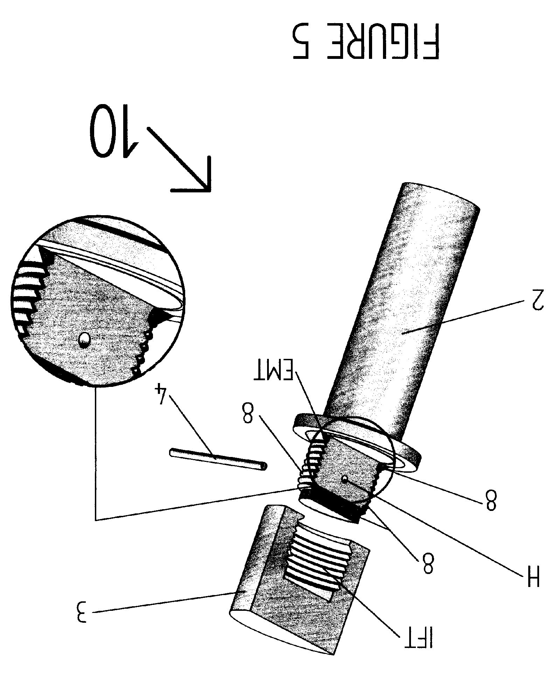

With reference to Figure 5, which represents a schematic, cutaway, three-dimensional view, 10, the various parts of the oil, or gas, valve system already described with reference to earlier figures is shown, together with the relevant alphanumeric indicators, and the hole, H, through which the anti-vibration pin, 4, passes, is shown in the sectional view of the Stainless Steel part, 2, which is also shown in enlarged form.

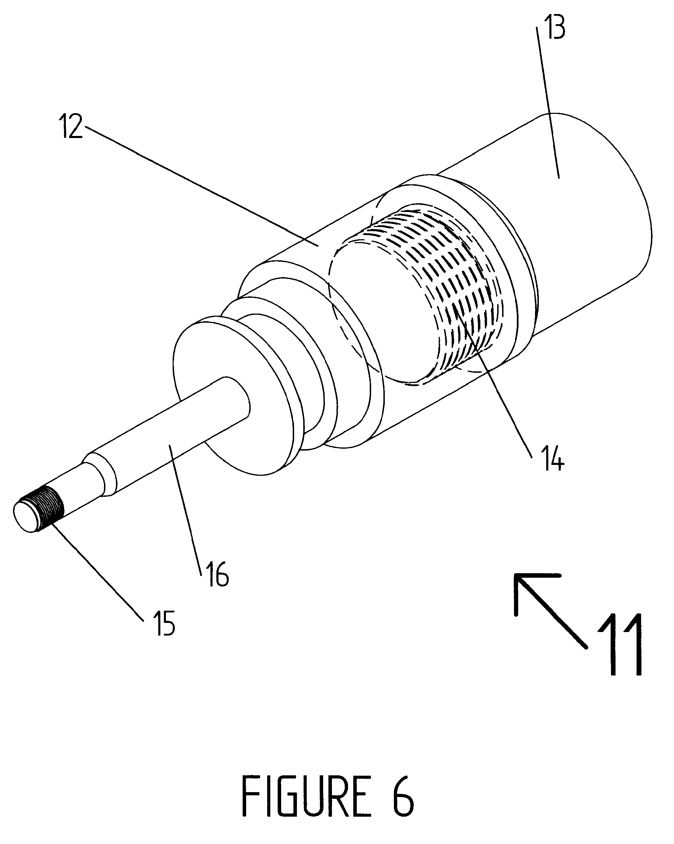

With reference to Figure 6, which represents a schematic three-dimensional view, 11, this shows the variant of the process involving the Stainless Steel, driving part, 12, which has an internal female thread (not discernable in the diagram) and the Tungsten Carbide, driven part, 13, having an external male thread, 14. In this other variant, an anti-rotation pin, and anti-vibration and stress minimising high-temperature resin, are used in the same way, but they are not shown in the diagram.

With further reference to Figure 6, the driven shank, 16, of the Stainless Steel driving part, 12, has a male thread, 15, formed on its lower end, for connection to driving components.

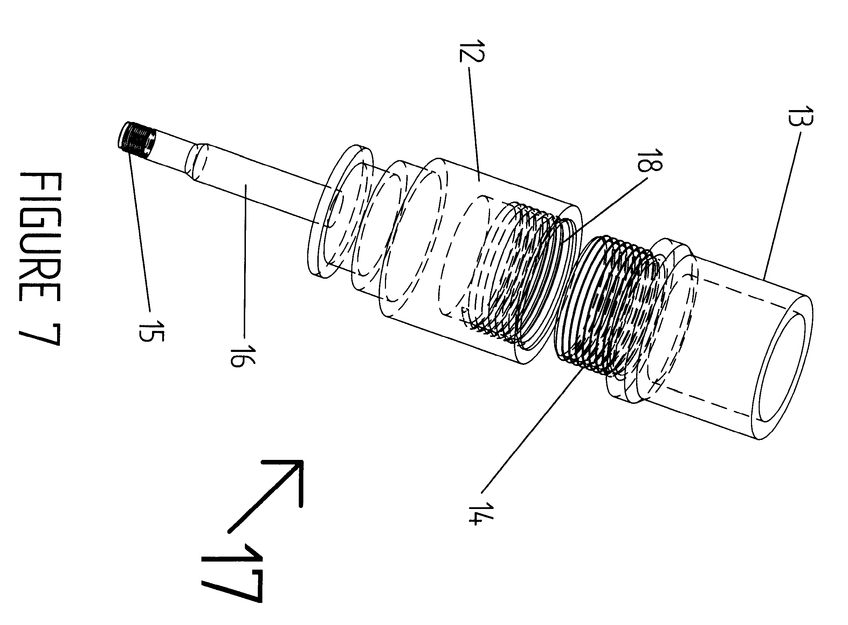

With reference to Figure 7, which represents a schematic, three-dimensional view, 17, the configuration shown in Figure 6, is shown again, but with the Tungsten Carbide driven part, 13, separated from the Stainless Steel driving part, 12, and showing the internal female thread, 18, formed in the latter.

All other parts are as already described with reference to Figure 6, and need not be described again, but it is to be noted that the part of the Tungsten Carbide driven part, 13, which functions in controlling flow, or pressure, is hollow, having a cylindrically shaped wall.

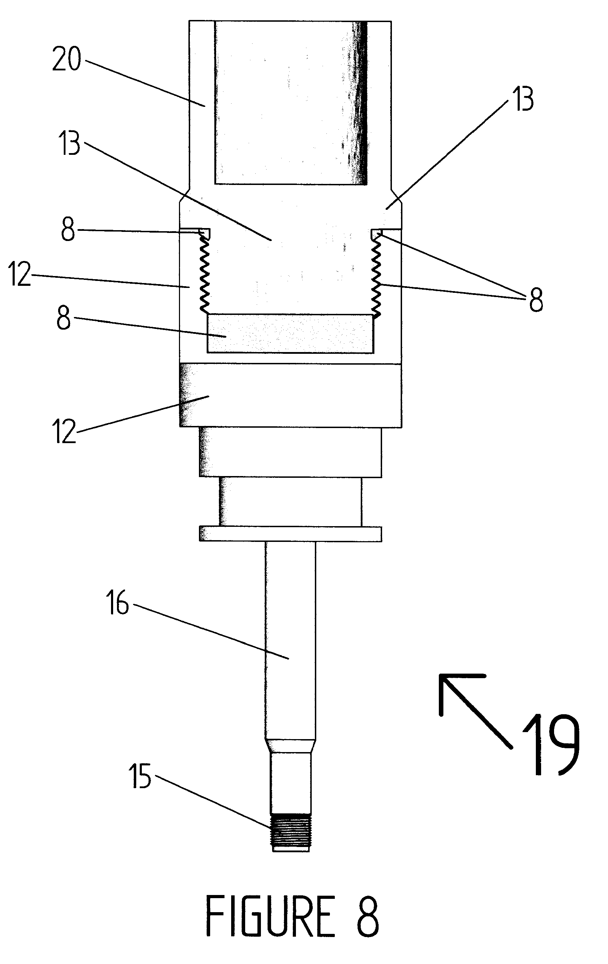

With reference to Figure 8, which represents a schematic, two-dimensional view, 19, the oil, or gas, valve system already described with reference to Figure 6, and Figure 7, is shown in front elevation, with part of the upper section, cut away to reveal the threads, and the resin, 8.

It is pointed out, with reference to the foregoing and following account, that the Tungsten Carbide part, containing its internal female thread (or external male thread in the other variant) is a sintered material which is manufactured in a sintering process involving the compression of Tungsten Carbide particles into a coherent solid, under the application of heat, but at a temperature below the melting point of Tungsten. It is further pointed out, that, in either variant, a hole for the ant-rotation pin is formed in the outer part and that this serves as a guide for creating the aligned hole in the inner part.

It is yet further pointed out that in the assembly phase of the process, the high-temperature resistant resin is placed in the part which contains the female thread, and the part having the male thread is then screwed into the former, using a torque wrench at an optimum torque loading of 45 Newton Metres.

The hole, H (see Figure 5) is then drilled through the inner part, using the existing hole in the outer part as a guide. Glue is then applied to the anti-rotation pin and the pin is then pushed into the two parts, thereby locking them together. The whole assembly is then cured by heating in a furnace.

It is pointed out, with reference to the foregoing, that the use of threads on the two operating parts of the oil or gas valve system will allow the driven part, which will suffer degradation during operational use, and hence become less efficient over the passage of time, to be removed from the driving part and hence be replaced with a new part. This serves to render the driving part reusable in its main role, thereby conserving materials, and reducing the need for expensive, and time-consuming, replacement regimes.

It is further pointed out, with reference to the foregoing, that the material utilised for cushioning the otherwise contacting surfaces of the relevant parts of the valve system can be any material which adequately performs the functions already described for the high-temperature resistant resin.

It is yet further pointed out, with reference to the foregoing, that various holes are formed in the operating parts of the valve system, and that, for clarity, they are not shown in the diagrams.

It is still yet further pointed out with reference to the foregoing, that the methods described therein are also relevant to any situation in which parts of a system are to be fixed together so that the affects, on component parts of the system, of the conditions accompanying manufacture and use, are minimised.

## Claims

1. A method involving the fixing together of parts of a system, to produce an operational unit in which the said parts of the system are fixed to one another according to a special process which minimises failure of the said system.

2. A method as claimed in claim 1, wherein the incidence of failure of the said system is minimised both during manufacture of the operational unit and during its operational use.

3. A method as claimed in claim 2, wherein the said system is a flow control valve, or a pressure control valve, used in the oil and gas industry.

4. A method as claimed in claim 3, wherein the said valve consists of a minimum of two parts which are to be fixed together, wherein one part is provided with a male thread and the other part is provided with a female thread, so that one part can be screwed into the other, and wherein the dimensions and shapes of the threads on each part are such as to leave a gap between them when they are screwed together, wherein the gap is sufficient to allow a high-temperature resistant resin, in the form of a compressible powder, or other suitable material, to be located between the threads, and between other, otherwise mutually contacting surfaces, wherein the resin forms a cushion between the threads and the otherwise contacting surfaces, and also allows for expansion of one said part in relation to the other, so that the effects of the forces accompanying expansion and contraction are minimised and so that stress in the said parts does not cause any part to suffer from degradation and consequent fracture.

5. A method as claimed in claim 4, wherein the high-temperature resistant resin, or other suitable material, is placed in the part having a female threaded socket, so that when the male threaded part is screwed into the female threaded part, the high-temperature resistant resin is evenly distributed between the threads of each part and between the other, otherwise contacting surfaces.

6. A method as claimed in claim 5, wherein an anti-vibration pin is inserted through aligned cylindrical holes, formed in each of the two said parts, in order to prevent the movement of one part relative to the other, and to minimise the effects of vibration, when the two said parts are fixed together and are in operational use.

7. A method as claimed in claim 6, wherein the use of threads on the two operating parts of the oil or gas valve system will allow the driven part, which will suffer degradation during operational use, and hence become less efficient over the passage of time, to be removed from the driving part and hence be replaced with a new part, thus rendering the driving part reusable in its main role, thereby conserving materials, and reducing the need for expensive, and time-consuming, replacement regimes.

8. A method of fixing together, parts of a system involving valves, constructed and arranged to operate substantially as hereinbefore described with reference to any one of the embodiments illustrated in Figures 1 to 8, of the accompanying drawings.
